# EUROPÄISCHE PATENTSCHRIFT

(11) **EP 3 017 848 B1**
(45) Veröffentlichungstag und Bekanntmachung des Hinweises auf die Patenterteilung: **29.04.2020**
(21) Anmeldenummer: 15190558.5
(22) Anmeldetag: 20.10.2015
(51) Int. Cl.: A63B 29/08, F16B 2/24

(54) **EISPICKEL MIT VERSTELLBARER HANDSTÜTZE**
ICE AXE WITH ADJUSTABLE HAND SUPPORT
PIOLET DOTÉ D'UN REPOSE-MAIN RÉGLABLE

(30) Priorität: 05.11.2014 DE 102014222619
(43) Veröffentlichungstag der Anmeldung: 11.05.2016
(73) Patentinhaber: Oberalp Spa, 39100 Bozen (IT)
(72) Erfinder: RESCH, Egon, 39050 Tiers (IT)
(74) Vertreter: Feller, Frank

(56) Entgegenhaltungen:
- EP-A2- 2 363 248
- WO-A1-01/79709
- AT-B- 138 284
- DE-U1-202013 100 111
- US-A- 1 929 539
- US-A1- 2011 016 732

## Beschreibung

Die vorliegende Erfindung betrifft einen Eispickel, umfassend einen Kopfabschnitt mit einer Haue, eine Spitze, einen zwischen Kopfabschnitt und Spitze verlaufenden Schaftabschnitt und eine Handstütze, welche entlang des Schaftabschnitts verschiebbar und an verschiedenen Positionen feststellbar ist, wobei die Handstütze einen von dem Schaftabschnitt in radialer Richtung abstehenden Vorsprung aufweist.

Eispickel dieser Art finden breite Verwendung im alpinen Bergsport und insbesondere beim Eisklettern. Der Nutzer hält den Eispickel bei der Bewegung bergauf am Schaftabschnitt zwischen dem Kopfabschnitt und der Handstütze fest und kann sich nach dem Einschlagen der Haue in das Eis so am Eispickel hochziehen. Damit die Hand dabei nicht am Schaft zur Spitze hin abrutscht, weisen bekannte Eispickel eine Handstütze mit einem in radialer Richtung abstehenden Vorsprung auf, an welchem sich die Hand des Nutzers abstützen kann.

Ein Eispickel der vorstehend genannten Art ist beispielsweise aus der EP 2 363 248 A2 bekannt und umfasst insbesondere eine Handstütze, deren Position entlang des Schafts einstellbar ist, sodass der Nutzer die Handstütze je nach Bedarf und momentaner Situation am Berg verstellen kann. Der beschriebene Verstellmechanismus ist jedoch insbesondere mit Handschuhen und unter schwierigen Einsatzbedingungen nur mühsam zu betätigen. Darüber hinaus ist der Mechanismus entweder nur mit relativ hoher Kraft zu lösen oder erlaubt keine ausreichend feste Klemmwirkung bei hohen Belastungen (beispielsweise beim Abrutschen am Schaft).

Die EP 2 363 248 A2 sowie die US 2011/016732 A1 offenbaren jeweils einen Eispickel mit den Merkmalen des Oberbegriffs des Anspruchs 1. Die bekannten Eispickel weisen eine Handstütze auf, die in einer ersten Stellung am Schaftabschnitt des Eispickels festgeklemmt werden kann und in einer zweiten Stellung gelöst werden kann, sodass sie entlang des Schafts bewegbar ist. Außerdem offenbart die AT 138 284 B einen Eispickel mit einem abnehmbaren Gleitring, der entlang eines Schaftabschnitts des Eispickels bewegbar ist und eine Handschlaufe trägt.

Vor diesem Hintergrund ist es Aufgabe der vorliegenden Erfindung, einen Eispickel bereit zu stellen, dessen Handstütze einfach verstellbar ist und zuverlässig in einer eingestellten Position verbleibt.

Gemäß der vorliegenden Erfindung wird diese Aufgabe gelöst durch einen Eispickel nach Anspruch 1. Erfindungsgemäß weist die Handstütze einen ersten Blockierabschnitt auf, wobei der erste Blockierabschnitt bei Ausübung einer Kraft auf den Vorsprung in Richtung der Spitze des Eispickels in Blockiereingriff mit einem zweiten Blockierabschnitt des Schafts gelangt, so dass eine Bewegung der Handstütze in Richtung der Spitze blockiert ist, und wobei der erste Blockierabschnitt bei Ausübung einer Kraft auf den Vorsprung in Richtung des Kopfabschnitts des Eispickels aus dem Blockiereingriff mit dem zweiten Blockierabschnitt gelöst wird, so dass eine Bewegung der Handstütze in Richtung des Kopfabschnitts zugelassen ist.

Der Erfindung liegt die Idee zugrunde, dass die von der Handstütze bestimmungsgemäß aufzunehmende Last während der Benutzung des Eispickels nach unten in Richtung der Spitze des Eispickels wirkt, da eine sich an dem Vorsprung der Handstütze abstützende Hand des Benutzers beim Hochziehen am Eispickel den Vorsprung nach unten in Richtung Spitze belastet. Da erfindungsgemäß bei Ausübung einer solchen Kraft der erste Blockierabschnitt der Handstütze blockierend mit dem zweiten Blockierabschnitt des Schafts in Eingriff gelangt und die Bewegung der Handstütze entlang des Schafts stoppt, ist die für die Benutzung notwendige Fixierung der Handstütze am Schaft gewährleistet. Wird der Vorsprung dagegen vom Nutzer absichtlich mit einer Kraft in Richtung des Kopfabschnitts beansprucht, so wird der Eingriff zwischen den Blockierabschnitten gelöst und die Handstütze ist am Schaft zur Verstellung ihrer Position bewegbar. Eine solche Kraftwirkung erfolgt zuverlässig nicht in dem Fall, dass der Benutzer sich an der Handstütze abstützt, sondern nur dann, wenn er die Handstütze entlastet, um willentlich die Position der Handstütze zu verstellen.

Erfindungsgemäß wird somit die Aufwärtsbeanspruchung des Vorsprungs in Richtung Kopfabschnitt dafür ausgenutzt, die Handstütze in einen verstellbaren oder verschiebbaren Zustand zu bringen, während eine Abwärtsbeanspruchung des Vorsprungs in Richtung Spitze automatisch zu einer Blockierung der Handstütze in der momentan eingestellten Position entlang des Schafts führt. Die Verstellung der Handstütze ist somit äußerst einfach, intuitiv und auch mit Handschuhen gut durchführbar. Gleichzeitig ist bei jeder Krafteinwirkung auf den Vorsprung in Abwärtsrichtung, insbesondere auch bei einem plötzlichen Abrutschen des Nutzers während des Verstellvorgangs, sichergestellt, dass die Handstütze sofort in ihrer Position relativ zum Schaft blockiert wird.

Gemäß der vorliegenden Erfindung verkantet die Handstütze bei Ausübung einer Kraft auf den Vorsprung in Richtung der Spitze des Eispickels am Außenumfang des Schaftabschnitts, sodass eine Bewegung entlang des Schaftabschnitts blockiert ist. Die Verkantung führt zu einer Selbsthemmung, die besonders hohe Sicherheit bietet, da bei zunehmender Kraft auf den Vorsprung in Richtung der Spitze die Verkantungswirkung ansteigt und die Blockierung der Bewegung der Handstütze weiter verbessert wird. Die Handstütze sitzt somit besonders fest dann, wenn sie am meisten benötigt wird.

Gemäß der Erfindung ist vorgesehen, dass der Schaftabschnitt einen zylinderförmigen Außenumfang aufweist und dass die Handstütze eine Durchgangsöffnung aufweist, in der der Schaftabschnitt passend aufgenommen ist, wobei die Durchgangsöffnung einen ersten Anlageabschnitt zur Anlage an einem dem Vorsprung zugewandten vorderen Oberflächenabschnitt des Schaftabschnitts und einen zweiten Anlageabschnitt zur Anlage an einem dem Vorsprung abgewandten rückwärtigen Oberflächenabschnitt des Schaftabschnitts aufweist, wobei der erste Anlageabschnitt gegenüber dem zweiten Anlageabschnitt in axialer Richtung des Schaftabschnitts zum Kopfabschnitt des Eispickels hin versetzt ist und wobei vorzugsweise erster und zweiter Anlageabschnitt in axialer Richtung einander überlappen. Durch diese Ausführungsform wird der Effekt erreicht, dass bei Ausübung einer Kraft auf den Vorsprung in Richtung der Spitze des Eispickels die zwischen Handstütze und Schaftabschnitt wirkenden Anlageflächen eine Verkippung der Handstütze relativ zum Schaftabschnitt begünstigen und somit eine blockierende Verkantung der Handstütze am Schaftabschnitt fördern. Bei Ausübung einer Kraft auf den Vorsprung in Richtung des Kopfabschnitts sind dagegen die wirkenden Anlageabschnitte zwischen Handstütze und Schaftabschnitt in axialer Richtung relativ weit verteilt beziehungsweise relativ groß, sodass eine Verkippung und damit Verkantung der Handstütze unterbunden ist und somit eine Verschiebung der Handstütze am Schaft erlaubt ist.

In einer Ausführungsform der Erfindung ist vorgesehen, dass die Handstütze in Bezug auf den Schaftabschnitt um ein Kippachse zwischen einer ersten Stellung und einer zweite Stellung verkippbar ist, wobei die Kippachse orthogonal zur Schaftachse und orthogonal zur radialen Richtung, in der der Vorsprung von der Schaftachse vorsteht, verläuft, wobei eine Verschiebung der Handstütze entlang des Schaftabschnitts zur Spitze hin blockiert ist, wenn die Handstütze in die erste Stellung gestellt ist, und wobei eine Verschiebung der Handstütze entlang des Schaftabschnitts zur Spitze hin zugelassen ist, wenn die Handstütze in die zweite Stellung gestellt ist. In dieser Ausführungsform sind zwei Kippstellungen der Handstütze voneinander unterscheidbar und erlauben dem Nutzer eine einfache und nachvollziehbare Bedienung der Handstütze zwischen einer ersten Stellung oder Blockierstellung und einer zweiten Stellung oder Verschiebungsstellung. Vorzugsweise nähert sich dabei der Vorsprung bei einer Bewegung der Handstütze von der ersten Stellung in die zweite Stellung dem Kopfabschnitt des Eispickels an.

Ist die Handstütze in die zweite Stellung gestellt, sodass sie zur Spitze hin bewegbar ist, so wird sie im Allgemeinen vorzugsweise auch zum Kopfabschnitt hin bewegbar sein, das heißt die Handstütze ist in der zweiten Stellung in beide Richtungen entlang des Schaftabschnitts bewegbar, um die gewünschte Position einzustellen. In einer Variante der Erfindung kann die

Handstütze ferner derart eingerichtet sein, dass sie auch in der ersten Stellung entlang des Schaftabschnitts verschiebbar ist, dann jedoch nur in Richtung des Kopfabschnitts. Ein solcher Eispickel kann vorteilhaft dann als Stützstock bei der Fortbewegung in flacherem Gelände eingesetzt werden; wird bei dieser Benutzung der Eispickel am Kopfabschnitt ergriffen und mit der Spitze abwärts in den Schnee beziehungsweise in das Eis eingesteckt, so kann die Handstütze durch den Schnee beziehungsweise das Eis entlang des Schaftabschnitts nach oben zum Kopfabschnitt hin verschoben werden, sodass der Schaftabschnitt tiefer in den Untergrund eindringen kann. Ein vorheriges manuelles Verstellen der Handstütze in Richtung Kopfabschnitt kann dann entfallen, sodass die Bedienung weiter erleichtert wird.

Der Blockiereingriff zwischen erstem und zweitem Blockierabschnitt ist vorzugsweise ein reibschlüssiger Eingriff, sodass mit einfachen Mitteln eine stufenlose Verstellbarkeit erreicht werden kann. Alternativ oder zusätzlich kann der Blockiereingriff zwischen erstem und zweitem Blockierabschnitt ein formschlüssiger Eingriff sein, wodurch insbesondere die Sicherheit gegen unbeabsichtigte Verstellung der Handstütze verbessert werden kann. Ein Abschnitt aus erstem Blockierabschnitt und zweitem Blockierabschnitt kann mindestens einen Vorsprung aufweisen und der andere Abschnitt aus erstem Blockierabschnitt und zweitem Blockierabschnitt kann mindestens eine Vertiefung aufweisen, wobei in dem Blockiereingriff der Vorsprung in der Vertiefung aufgenommen ist. Auf diese Weise können die Blockierabschnitte ineinander verrasten und die eingestellte Position wird sicher gehalten.

Ein Eispickel gemäß der vorliegenden Erfindung weist vorzugsweise ferner ein Federmittel auf, welches zwischen Schaftabschnitt und Handstütze wirkend angeordnet ist. Ein solches Federmittel kann die Handstütze in eine definierte Stellung, beispielsweise in die oben erwähnte erste Stellung oder Blockierstellung, vorspannen, sodass eine unbeabsichtigte Verstellung der Handstütze verhindert wird.

Der Eispickel kann mit einem Federmittel ausgestattet sein, welches die Handstütze in Richtung einer Annäherung des Vorsprungs an die Spitze des Eispickels vorspannt. Zur Verstellung der Handstütze muss der Nutzer dann den Vorsprung gegen die Kraft der Feder anheben, das heißt zum Kopfabschnitt hin drücken. Das Federmittel hält die Handstütze im unbelasteten Fall zuverlässig in der blockierten Stellung.

In einer bevorzugten Variante des Federmittels umfasst dieses ein an der Handstütze angeordnetes Federelement und einen durch das Federelement zu dem Schaftabschnitt hin vorgespannten Roll- oder Gleitabschnitt, insbesondere einen Roll- oder Gleitkörper. Auf diese Weise beeinträchtigt die Federvorspannung der Handstütze nicht die leichtgängige Verschiebbarkeit der Handstütze entlang des Schaftabschnitts.

Die vorliegende Erfindung ist mit besonderem Vorteil anwendbar für einen Eispickel, bei welchem der Vorsprung der Handstütze in einer durch die Haue des Eispickels definierten Vorwärtsrichtung ausgerichtet ist. Der Vorsprung stützt dann die Hand zuverlässig nach unten hin ab, wenn der Eispickel mit der Haue voran in das Eis geschlagen ist. Für diese Art der Benutzung ist die erfindungsgemäße einfache Verstellbarkeit der Handstütze besonders wirksam.

Ferner weist der Kopfabschnitt des Eispickels vorzugsweise einen Schaufelabschnitt oder einem Hammerabschnitt auf, welcher sich in einer der Haue entgegengesetzten Richtung erstreckt. Der Kopfabschnitt bildet somit mit dem oberen Teil des Schaftabschnitts eine allgemeine T-Form, die ein Ergreifen des Kopfabschnitts von oben her durch die Hand des Benutzers und eine Verwendung des Eispickels durch Einstechen der Spitze in den Untergrund erlaubt. Die für diese Benutzung erwünschte Verstellung der Handstütze zum Kopfabschnitt hin ist durch die Prinzipien der vorliegenden Erfindung besonders einfach und gegebenenfalls sogar selbstständig wirkend.

Die Erfindung wird nachfolgend anhand bevorzugter Ausführungsbeispiele unter Bezugnahme auf die beigefügten Zeichnungen näher erläutert. Es zeigen:

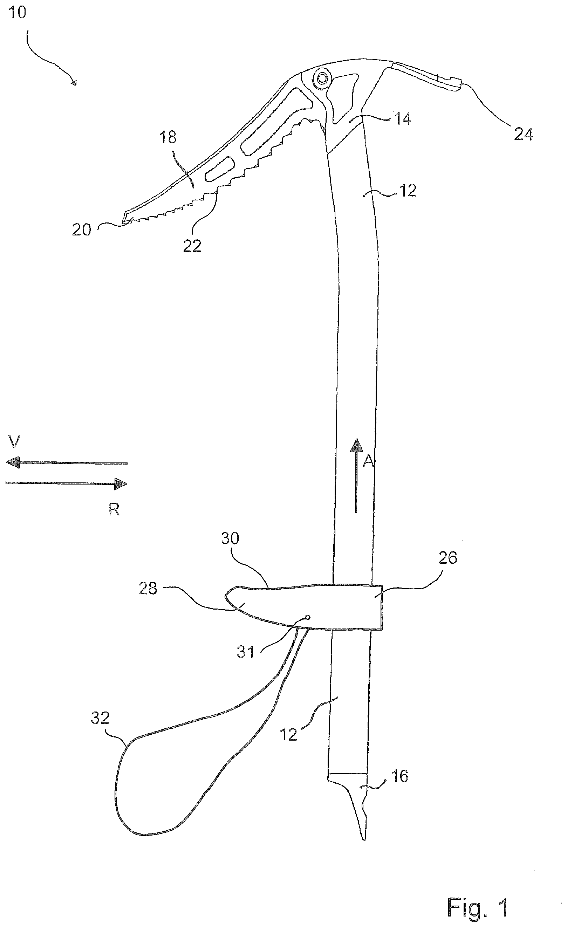

- Figur 1:: eine Seitenansicht eines Eispickels gemäß einem ersten Ausführungsbeispiel der vorliegenden Erfindung,
- Figur 2:: eine seitliche Schnittdarstellung des Eispickels des ersten Ausführungsbeispiels im Bereich der Handstütze im unbelasteten oder nach oben belasteten Zustand,
- Figur 3:: eine seitliche Schnittdarstellung der Handstütze des ersten Ausführungsbeispiels in einem Belastungszustand, in welchem eine abwärts gerichtete Kraft auf den Vorsprung der Handstütze wirkt,
- Figur 4:: eine seitliche Schnittdarstellung eines Eispickels gemäß einem zweiten Ausführungsbeispiel der Erfindung im Bereich der Handstütze in einer Blockierstellung,
- Figur 5:: eine seitliche Schnittdarstellung der Handstütze des zweiten Ausführungsbeispiels in einer Freigabestellung,
- Figur 6:: eine seitliche Schnittdarstellung eines Eispickels gemäß einem dritten Ausführungsbeispiel der Erfindung im Bereich der Handstütze in einem Blockierzustand,
- Figur 7:: eine seitliche Schnittdarstellung der Handstütze des dritten Ausführungsbeispiels in einer Freigabestellung, und
- Figur 8:: eine obere Schnittdarstellung eines Eispickels gemäß einem vierten Ausführungsbeispiel der Erfindung in einer orthogonal zur Schaftachse verlaufenden Schnittebene.

Ein Eispickel 10 gemäß dem ersten Ausführungsbeispiel der Erfindung umfasst einen Schaftabschnitt 12, einen am oberen Ende des Schaftabschnitts 12 angeordneten Kopfabschnitt 14 und eine am unteren Ende des Schaftabschnitts 12 angeordnete Spitze 16. Auch wenn der Schaftabschnitt 12 sowohl geradlinig als auch in einer gewissen Krümmung verlaufen kann, so definiert die allgemeine Erstreckung des Schaftabschnitts 12 von Kopfabschnitt 14 zu Spitze 16 eine vertikale Richtung oder vertikale Schaftachse entsprechend einem bestimmungsgemäßen Gebrauch, bei welchem die Spitze 16 zumeist nach unten zeigt. Der Kopfabschnitt 14 umfasst eine Haue 18, welche dafür eingerichtet ist, in eine Eiswand eingeschlagen zu werden und hierfür mit einer Hauenspitze 20 und zumeist einer Mehrzahl von Zähnen 22 ausgestattet ist. Die Haue 18 steht in etwa orthogonal von der Vertikalachse in einer Vorwärtsrichtung V des Eispickels 10 ab. Ferner kann der Kopfabschnitt 14 eine Schaufel 24 aufweisen, welche sich entgegengesetzt zur Vorwärtsrichtung V in Rückwärtsrichtung R erstreckt.

Kopfabschnitt 14 und Spitze 16 können jeweils aus Metall oder einem anderen ausreichend schlagfesten Material gebildet sein und an dem Schaftabschnitt 12 befestigt oder materialeinheitlich mit dem Schaftabschnitt 12 ausgebildet sein.

Der Eispickel 10 umfasst ferner eine Handstütze 26, welche entlang des Schaftabschnitts 12 an mindestens zwei unterschiedlichen Positionen angeordnet und befestigt werden kann. Die Handstütze 26 bildet einen vorzugsweise in Vorwärtsrichtung V vorstehenden Vorsprung 28 aus, auf welchem sich von oben her ein Finger einer den Schaftabschnitt 12 umschließenden Hand eines Nutzers auf einer Fingerauflagefläche 30 abstützen kann. Die Länge des Vorsprungs 28, das heißt die Länge in Vorwärtsrichtung V, die der Vorsprung 28 von dem Schaftabschnitt 12 aus vorsteht, ist somit vorzugsweise gleich oder größer als die Dicke eines menschlichen Fingers. Vorzugsweise ist an der Handstütze 26 ein Ankerpunkt 31 für eine Sicherung vorgesehen, an welchem eine Sicherungsschlinge 32 gekoppelt ist, an der ein Karabiner oder anderes Sicherungsgerät des Nutzers eingehängt werden kann. Der Ankerpunkt 31 für die Sicherungsschlinge 32 kann dafür vorzugsweise ebenfalls an dem Vorsprung 28 der Handstütze 26 angeordnet sein.

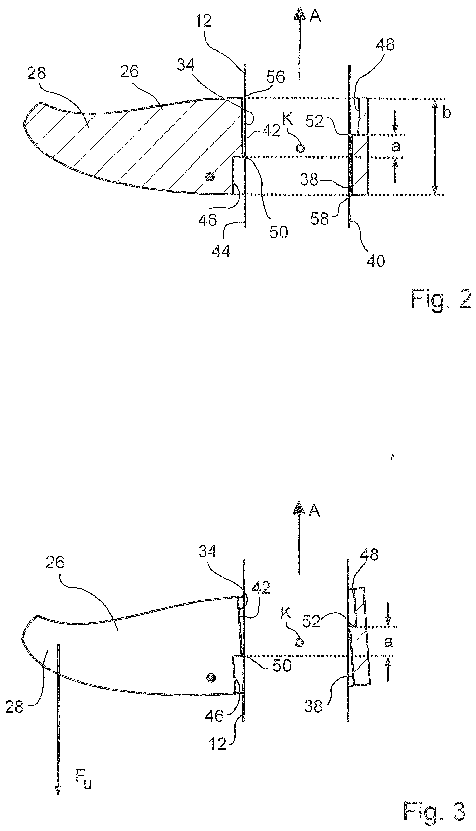

Unter Bezugnahme auf Figuren 2 und 3 wird nachfolgend die Handstütze 26 gemäß dem ersten Ausführungsbeispiel der Erfindung näher erläutert. Die Handstütze 26 weist eine Durchgangsöffnung 34 auf, welche an einen Außenumfang 36 des zumindest in diesem Abschnitt zylinderförmig ausgebildeten Schaftabschnitts 12 angepasst ist. Die Durchgangsöffnung 34 liegt mit einem hinteren Anlageabschnitt 38 an einem in Rückwärtsrichtung R weisenden hinteren Außenumfangsabschnitt 40 des Schaftabschnitts 12 an und liegt mit einem vorderen Anlageabschnitt 42 an einem in Vorwärtsrichtung V weisenden vorderen Außenumfangsabschnitt 44 des Schaftabschnitts 12 an. Der vordere Anlageabschnitt 42 liegt dem Vorsprung 28 der Handstütze 26 näher als der hintere Anlageabschnitt 38.

Wie ferner in Figuren 2 und 3 zu erkennen ist, liegen der vordere Anlageabschnitt 42 und der hintere Anlageabschnitt 38 der Handstütze 26 in Bezug auf eine vertikale Zentralachse A der Durchgangsöffnung 34 (entspricht Mittelachse des Schaftabschnitts 12 im Bereich der Handstütze 26) nicht symmetrisch einander gegenüber, sondern der vordere Anlageabschnitt 42 ist verglichen mit dem hinteren Anlageabschnitt 38 zum Kopfabschnitt 14 hin nach oben versetzt. Dabei überlappen sich die beiden Anlageabschnitte 42 und 38 jedoch in axialer Richtung über eine axiale Länge a. Im gezeigten Ausführungsbeispiel wird der axiale Versatz zwischen vorderem Anlageabschnitt 42 und hinterem Anlageabschnitt 38 beispielsweise durch mindestens eine Aussparung 46 am Rand der Durchgangsöffnung 34 der Handstütze 26 realisiert. Insbesondere weist die Durchgangsöffnung 34 im Bereich des vorderen Anlageabschnitts 42 an ihrem unteren (der Spitze 16 zugewandten) Randabschnitt eine erste Aussparung 46 auf, welche die axiale Erstreckung des vorderen Anlageabschnitts 42 nach unten begrenzt, und die Durchgangsöffnung 34 kann im Bereich des hinteren Anlageabschnitts 38 an ihrem oberen (dem Kopfabschnitt 14 zugewandten) Randabschnitt eine zweite Aussparung 48 aufweisen, welche die axiale Länge des hinteren Anlageabschnitts 38 von oben her begrenzt. Durch die Aussparungen 46, 48 weist die Handstütze 26 somit im vorderen unteren Bereich der Durchgangsöffnung 34 einen nach unten geöffneten Spalt auf und weist im hinteren oberen Bereich der Durchgangsöffnung 34 einen nach oben geöffneten Spalt auf. Die verbleibenden Anlageabschnitte 38, 42 sind in der Folge wie oben beschrieben axial zueinander versetzt.

Durch den axialen Versatz der vorderen und hinteren Anlageabschnitte 42, 38 in der oben beschriebenen Weise kommt es erfindungsgemäß zu einer Selbstblockade durch Verkanten der Handstütze 26 am Schaftabschnitt 12, wenn auf den Vorsprung 28 eine nach unten gerichtete Kraft Fᵤ einwirkt, wenn beispielsweise die Hand eines Nutzers sich auf dem Vorsprung 28 abstützt. Diese Verkantung ist in Figur 3 in aus illustrativen Gründen übersteigerter Form dargestellt. Zu erkennen ist, dass die Anlageabschnitte 38, 42 nur im Bereich ihres axialen Überlapps a in der Lage sind, der Verkippung der Handstütze 26 um eine orthogonal zur Zentralachse A und zur Vorwärtsrichtung V verlaufende Kippachse K Widerstand zu leisten. Mit anderen Worten fehlt im Bereich der mindestens einen Aussparung 46, 48 die notwendige Anlage der Handstütze 26 am Schaftabschnitt 12, um der Kippbewegung um die Achse K Widerstand zu leisten. Die Verkippung führt schließlich dazu, dass eine untere Kante 50 des vorderen Anlageabschnitts 42 in das Material des Schaftabschnitts 12 eindrückt und ebenso eine obere Kante 52 des hinteren Anlageabschnitts 38 in das Material des Schaftabschnitts 12 eindrückt und eine Bewegung der Handstütze 26 entlang des Schaftabschnitts 12 blockiert wird. Die untere Kante 50 und die obere Kante 52 bilden somit jeweils erste Blockierabschnitte der Handstütze im Sinne der vorliegenden Erfindung, während zugeordnete Bereiche der Oberfläche des Schaftabschnitts 12 zweite Blockierabschnitte im Sinne der vorliegenden Erfindung bilden. Je größer die auf den Vorsprung 28 in Abwärtsrichtung wirkende Kraft Fᵤ ist, das heißt je größer die Zugkraft nach unten durch die Finger des Nutzers oder durch den Zug an der Sicherungsschlinge 32 ist, desto stärker ist die Verkantungswirkung zwischen den Kanten 50, 52 und der Oberfläche des Schaftabschnitts 12, sodass eine sichere, selbsthemmende Verklemmung der Handstütze 26 am Schaftabschnitt 12 erreicht wird.

Die mindestens eine Aussparung 46, 48 kann gewünschtenfalls mit einem flexiblen Material oder einem zusätzlich reibwirksamen Material gefüllt sein, beispielsweise mit einem Gummi oder einem anderen Kunststoffmaterial, welches bremswirksam erst dann in Kontakt mit der Oberfläche des Schaftabschnitts 12 gelangt, wenn die Handstütze um die Kippachse K ein Stück weit in Richtung einer Absenkung des Vorsprungs 28 verkippt ist. Anstelle oder zusätzlich zur Klemmwirkung der unteren Kante 50 beziehungsweise oberen Kante 52 kann somit für die Blockierung der Bewegung zwischen Handstütze 26 und Schaftabschnitt 12 auch das mindestens eine bremswirksame Material in reibschlüssigen Kontakt mit dem Schaftabschnitt 12 gebracht werden.

Wenn keine Kraft auf den Vorsprung 28 einwirkt oder eine Kraft in Aufwärtsrichtung (zum Kopfabschnitt 14 hin) auf den Vorsprung 28 einwirkt, so verhindert der axiale Versatz zwischen den Anlageabschnitten 42, 38 eine Verkippung der Handstütze 26 und hält die Anlageabschnitte 42, 38 im parallelen, flächigen Kontakt mit dem Außenumfang 36 des Schaftabschnitts 12 (Figur 2). Die für eine etwaige Verkantung bei Aufwärtsbelastung des Vorsprungs 28 maßgebliche axiale Länge b würde sich von einer oberen Kante 56 des vorderen Anlageabschnitts 42 bis zu einer unteren Kante 58 des hinteren Anlageabschnitts 38 erstrecken. Dieser axiale Abstand b ist jedoch wesentlich größer als der axiale Abstand a der Kanten 50 und 52, die für eine Verkantung der Handstütze 26 bei Abwärtsbewegung des Vorsprungs 28 wirksam sind. Bei Krafteinwirkung auf den Vorsprung nach oben tritt daher keine Verkantung der Handstütze 26 am Schaftabschnitt 12 auf und die Handstütze 26 ist am Schaftabschnitt 12 in vertikaler Richtung frei bewegbar.

Anzumerken ist, dass im ersten Ausführungsbeispiel der Erfindung die in Figur 2 gezeigte unbelastete Stellung auch einer Normalstellung der Handstütze 26 entspricht, wenn also der Vorsprung 28 vom Nutzer nicht belastet wird. Das bedeutet, dass in diesem Zustand eine Verstellung der Handstütze 26 zum Kopfabschnitt 14 hin ohne Weiteres entweder durch Ergreifen der Handstütze 26 durch den Nutzer oder selbsttätig durch Einstechen des Schaftabschnitts 12 mit der Spitze 16 voran in den Schnee möglich ist. Die Handstütze 26 könnte sogar am Vorsprung 28 ergriffen und zum Kopfabschnitt 14 hin gezogen werden. Eine Verstellung zur Spitze 16 hin dagegen ist nur möglich, wenn die Handstütze 26 in nicht verkippter Stellung oder mit leichter Kraftwirkung in Richtung einer Verkippung im Sinne einer Aufwärtsbewegung des Vorsprungs 28 betätigt wird.

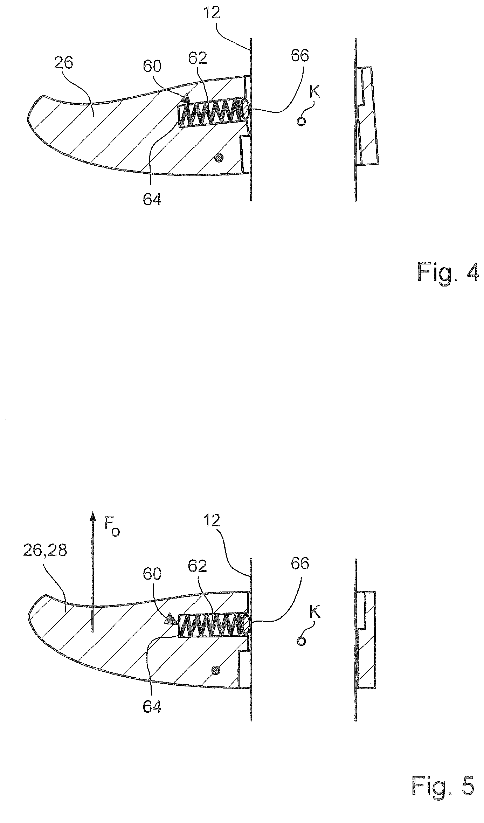

Unter Bezugnahme auf Figuren 4 und 5 wird nachfolgend ein zweites Ausführungsbeispiel der Erfindung beschrieben. Im Folgenden wird nur auf die Unterschiede gegenüber dem ersten Ausführungsbeispiel näher eingegangen. In Bezug auf alle übrigen Merkmale des Eispickels des zweiten Ausführungsbeispiels wird ausdrücklich auf die Zeichnungen und die vorstehende Beschreibung des ersten Ausführungsbeispiels verwiesen. Alle Merkmale und Vorteile des ersten Ausführungsbeispiels lassen sich in gleicher oder entsprechender Weise auch auf das zweite Ausführungsbeispiel übertragen.

Die Handstütze 26 des zweiten Ausführungsbeispiels weist eine Federanordnung 60 auf, welche die Handstütze im Sinne einer Verkippung in einer Richtung, in der sich der Vorsprung 28 nach unten zur Spitze 16 hin bewegt, vorspannt. Mit anderen Worten spannt die Federanordnung 60 die Handstütze 26 in eine Blockierstellung vor.

Die Federanordnung 60 umfasst vorzugsweise eine Feder 62, hier eine Spiralfeder, welche in einer passenden Vertiefung 64 im Vorsprung 28 aufgenommen ist und deren Wirkungsrichtung in Rückwärtsrichtung R verläuft, das heißt in radialer Richtung auf den Schaftabschnitt 12 zu. Ein beispielsweise aus Kunststoff gebildeter Gleitkörper 66 befindet sich in Anlage am Außenumfang des Schaftabschnitts 12 und wird durch die Feder 62 zum Schaftabschnitt 12 hin vorgespannt. Die Feder 62 stützt sich somit einerseits über den Gleitkörper 66 am Schaftabschnitt 12 und andererseits über die Aussparung 64 am Vorsprung 28 der Handstütze 26 ab.

Das zweite Ausführungsbeispiel ermöglicht nicht nur eine definierte Normalstellung der Handstütze 26 im unbelasteten Zustand sondern erlaubt durch Wahl eines geeigneten Spiels zwischen dem Schaftabschnitt 12 und der Durchgangsöffnung 34 eine wahrnehmbare Verkippung der Handstütze 26 zwischen der Blockierstellung oder ersten Stellung gemäß Figur 4 und einer Freigabestellung oder zweiten Stellung gemäß Figur 5, wobei die Freigabestellung für den Nutzer wahrnehmbar verschieden ist von der Blockierstellung. Beim Übergang von der Blockierstellung in die Freigabestellung muss der Nutzer die Handstütze 26 in Richtung einer Annäherung des Vorsprungs 28 an den Kopfabschnitt 14 ein Stück weit um die Kippachse K kippen, wobei bei dieser Verstellbewegung die Kraft der Federanordnung 60 zu überwinden ist. Nach Beendigung des Verstellvorgangs und Lösen der Kraft auf die Handstütze 26 durch den Benutzer kehrt die Handstütze 26 selbsttätig aufgrund der Federkraft der Federanordnung 60 wieder in die Blockierstellung zurück.

Anzumerken ist, dass sich im zweiten Ausführungsbeispiel die Handstütze 26 im unbelasteten Normalzustand zwar in der in Figur 4 gezeigten Blockierstellung befindet, jedoch eine selbsttätige Verstellung der Handstütze 26 zum Kopfabschnitt 14, insbesondere dann, wenn der Eispickel 10 am Kopfabschnitt 14 ergriffen und mit der Spitze 16 voran in den Schnee gesteckt wird, dennoch möglich ist. Dies liegt daran, dass die Angriffsfläche für den Schnee, die der Vorsprung 28 bereit stellt, deutlich größer ist als die Angriffsfläche, die der auf der hinteren Seite des Schaftabschnitts 12 liegende Teil der Handstütze 26 (im Bereich des hinteren Anlageabschnitts 38) bietet, sodass die von unten her auf die Handstütze 26 einwirkende Kraft durch den Schnee beim Einstecken der Spitze 16 die Handstütze im Sinne einer Aufwärtsbewegung des Vorsprungs 28 verstellt, das heißt in die Freigabestellung verstellt, und somit eine Aufwärtsverschiebung der Handstütze 26 zum Kopfabschnitt 14 hin ermöglicht wird.

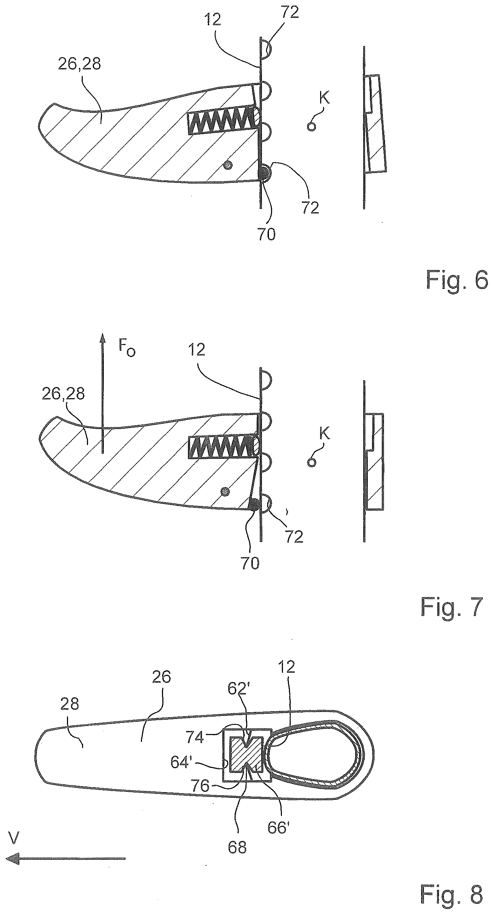

Unter Bezugnahme auf Figuren 6 und 7 wird nachfolgend ein drittes Ausführungsbeispiel der vorliegenden Erfindung näher erläutert. Das dritte Ausführungsbeispiel ist eine Weiterbildung des zweiten Ausführungsbeispiels, sodass nachfolgend nur auf die Unterschiede zum zweiten Ausführungsbeispiel eingegangen wird und im Übrigen auf die vorstehende Beschreibung und die Zeichnungen des zweiten Ausführungsbeispiels sowie des ersten Ausführungsbeispiels verwiesen wird. Die Handstütze 26 des Eispickels gemäß dem vierten Ausführungsbeispiel der vorliegenden Erfindung weist einen Rastvorsprung 70 auf, welcher in einem vorderen unteren Abschnitt der Durchgangsöffnung 34 oder/und in einem hinteren oberen Abschnitt der Durchgangsöffnung 34 ausgebildet ist und fest mit der Handstütze 26 verbunden ist. Der in der illustrierten Variante am unteren vorderen Abschnitt der Durchgangsöffnung 34 vorgesehene Rastvorsprung 70 ist dafür eingerichtet, in eine passende Vertiefung 72 des Schaftabschnitts 12 formschlüssig einzugreifen. Entlang der vertikalen Erstreckung des Schaftabschnitts 12 sind vorzugsweise eine Mehrzahl solcher Vertiefungen 72 in vorteilhaft gleichen Abständen angeordnet, um eine formschlüssige Arretierung der Handstütze in einer gewünschten Position vornehmen zu können.

Die Federanordnung 60 spannt die Handstütze 26 in die in Figur 6 gezeigte Blockierstellung vor, in welcher der Rastvorsprung 70 formschlüssig in der Aussparung 72 sitzt und somit eine Bewegung der Handstütze zur Spitze 16 des Eispickels hin blockiert ist. Wird die Handstütze 26 gegen die Kraft der Federanordnung in die Freigabestellung verkippt, indem der Vorsprung 28 nach oben hin gedrückt wird, so wird der Rastvorsprung 70 aus der Aussparung 72 zurückgezogen und die Blockierung zwischen Handstütze 26 und Schaftabschnitt 12 wird gelöst. Die Handstütze 26 kann dann entlang des Schaftabschnitts 12 nach oben oder nach unten verschoben werden, etwa bis zu einer Position, in der der Rastvorsprung 70 einer anderen Aussparung 72 des Schaftabschnitts 12 gegenüberliegt, sodass der Rastvorsprung 70 in diese Aussparung 72 einrasten kann.

Unter Bezugnahme auf Figur 8 wird nachfolgend ein viertes Ausführungsbeispiel der vorliegenden Erfindung näher erläutert. Das vierte Ausführungsbeispiel ist eine Abwandlung des zweiten beziehungsweise dritten Ausführungsbeispiels und im Folgenden wird nur auf die Unterscheide gegenüber dem zweiten beziehungsweise dritten Ausführungsbeispiel näher eingegangen. Zu den übrigen Merkmalen und Vorteilen wird auf die vorstehende Beschreibung der Ausführungsbeispiele eins bis drei verwiesen. Das vierte Ausführungsbeispiel weist eine modifizierte Federanordnung 60' auf, welche einen in einer Aussparung 64' des Vorsprungs 28 der Handstütze 26 aufgenommenen Rollkörper 66' umfasst, der am Schaftabschnitt 12 abrollt. Die Drehachse des Rollkörpers 66' verläuft vorzugsweise in lateraler Richtung, das heißt orthogonal zur vertikalen Richtung sowie zur Vorwärtsrichtung V, sodass der Rollkörper 66' entlang des vorderen Außenumfangsabschnitts des Schaftabschnitts 12 nach oben und nach unten abrollen kann.

Durch ein geeignetes Federelement ist die Achse des Rollkörpers 66' vorzugsweise zum Schaftabschnitt 12 hin vorgespannt, sodass der Rollkörper 66' in Richtung des Rollkontakts gedrückt wird. Im illustrierten Ausführungsbeispiel ist die Feder durch einen gespannten Federdraht 62' gebildet, welcher eine axiale Durchgangsöffnung 68 des Rollkörpers 66' entlang der Drehachse des Rollkörpers 66' durchsetzt und beiderseits des Rollkörpers 66' in der Handstütze 26 fest verankert ist. Der Federdraht 62' ist so vorgespannt, dass er den Rollkörper 66' an den Schaftabschnitt 12 andrückt. Anstelle des Federdrahts kann eine unter elastischer Eigenspannung stehende Feder, zum Beispiel eine Federklammer, verwendet werden.

Die Durchgangsöffnung 68 des Rollkörpers 66' kann an ihren beiden axialen Enden 74, 76 jeweils kegelförmig oder trichterförmig aufgeweitet sein, sodass der Federdraht 62' die Durchgangsöffnung 68 in einem Winkel relativ zur Drehachse des Rollkörpers 66' verlassen kann, um eine Vorspannung des Rollkörpers 66' in Richtung des Schaftabschnitts 12 aufzubauen, ohne dass der Federdraht 62' dabei über eine scharfe Kante am Rand der Durchgangsöffnung 68 geführt ist. Auf diese Weise wird die Leichtgängigkeit des Rollkörpers 66' verbessert und ein Verschleiß des Federdrahts 62' reduziert. Die Wirkungsweise und Funktionen des vierten Ausführungsbeispiels entsprechen im Übrigen denen des zweiten beziehungsweise dritten Ausführungsbeispiels.

## Patentansprüche

1. Eispickel (10), umfassend einen Kopfabschnitt (14) mit einer Haue (18), eine Spitze (16), einen zwischen Kopfabschnitt (14) und Spitze (16) verlaufenden Schaftabschnitt (12) und eine Handstütze (26), welche entlang des Schaftabschnitts (12) verschiebbar und an verschiedenen Positionen feststellbar ist, wobei die Handstütze (26) einen von dem Schaftabschnitt (12) in radialer Richtung abstehenden Vorsprung (28) aufweist,
wobei die Handstütze (26) einen ersten Blockierabschnitt (50, 52) aufweist, wobei der erste Blockierabschnitt (50, 52) bei Ausübung einer Kraft auf den Vorsprung (26) in Richtung der Spitze (16) des Eispickels in Blockiereingriff mit einem zweiten Blockierabschnitt (40, 44) des Schaftabschnitts (12) gelangt, so dass eine Bewegung der Handstütze (26) in Richtung der Spitze (16) blockiert ist,
wobei der erste Blockierabschnitt (50, 52) bei Ausübung einer Kraft auf den Vorsprung (28) in Richtung des Kopfabschnitts (14) des Eispickels (10) aus dem Blockiereingriff mit dem zweiten Blockierabschnitt (40, 44) gelöst wird, so dass eine Bewegung der Handstütze (26) in Richtung des Kopfabschnitts (14) zugelassen ist, und
wobei die Handstütze (26) bei Ausübung einer Kraft auf den Vorsprung (28) in Richtung der Spitze (16) des Eispickels am Außenumfang (40, 44) des Schaftabschnitts (12) verkantet, so dass eine Bewegung entlang des Schaftabschnitts (12) blockiert ist,
**dadurch gekennzeichnet, dass** der Schaftabschnitt (12) einen zylinderförmigen Außenumfang aufweist und dass die Handstütze (26) eine Durchgangsöffnung (34) aufweist, in der der Schaftabschnitt (12) passend aufgenommen ist, wobei die Durchgangsöffnung (34) einen ersten Anlageabschnitt (42) zur Anlage an einem dem Vorsprung (28) zugewandten Oberflächenabschnitt (44) des Schaftabschnitts (12) und einen zweiten Anlageabschnitt (38) zur Anlage an einem dem Vorsprung (28) abgewandten Oberflächenabschnitt (40) des Schaftabschnitts (12) aufweist, wobei der erste Anlageabschnitt (42) gegenüber dem zweiten Anlageabschnitt (38) in axialer Richtung (A) des Schaftabschnitts (12) zum Kopfabschnitt (14) des Eispickels (10) hin versetzt ist und wobei erster und zweiter Anlageabschnitt (42, 38) in axialer Richtung (A) einander überlappen.

2. Eispickel (10) nach einem der vorhergehenden Ansprüche, **dadurch gekennzeichnet, dass** die Handstütze (26) in Bezug auf den Schaftabschnitt (12) um ein Kippachse (K) zwischen einer ersten Stellung und einer zweiten Stellung verkippbar ist, wobei die Kippachse (K) orthogonal zur Schaftachse (A) und orthogonal zur radialen Richtung, in der der Vorsprung (28) von dem Schaftabschnitt (12) vorsteht, verläuft,
wobei eine Verschiebung der Handstütze (26) entlang des Schaftabschnitts (12) zur Spitze (16) hin blockiert ist, wenn die Handstütze (26) in die erste Stellung gestellt ist, und
wobei eine Verschiebung der Handstütze (26) entlang des Schaftabschnitts (12) zur Spitze (16) hin zugelassen ist, wenn die Handstütze (26) in die zweite Stellung gestellt ist.

3. Eispickel (10) nach Anspruch 2, **dadurch gekennzeichnet, dass** der Vorsprung (28) bei einer Bewegung der Handstütze (26) von der ersten Stellung in die zweite Stellung sich dem Kopfabschnitt des Eispickels annähert.

4. Eispickel (10) nach Anspruch 2 oder Anspruch 3, **dadurch gekennzeichnet, dass** eine Verschiebung der Handstütze (26) entlang des Schaftabschnitts (12) zum Kopfabschnitt (14) hin zugelassen ist, wenn die Handstütze (26) in die zweite Stellung gestellt ist.

5. Eispickel (10) nach einem der vorhergehenden Ansprüche, **dadurch gekennzeichnet, dass** der Blockiereingriff zwischen erstem und zweitem Blockierabschnitt (50, 52, 44, 40) ein reibschlüssiger Eingriff ist.

6. Eispickel (10) nach einem der vorhergehenden Ansprüche, **dadurch gekennzeichnet, dass** der Blockiereingriff zwischen erstem und zweitem Blockierabschnitt (70, 72) ein formschlüssiger Eingriff ist.

7. Eispickel (10) nach einem der vorhergehenden Ansprüche, **dadurch gekennzeichnet, dass** ein Abschnitt aus erstem Blockierabschnitt und zweitem Blockierabschnitt mindestens einen Vorsprung (70) aufweist und der andere Abschnitt aus erstem Blockierabschnitt und zweitem Blockierabschnitt mindestens eine Vertiefung (72) aufweist, wobei in dem Blockiereingriff der Vorsprung (70) in der Vertiefung (72) aufgenommen ist.

8. Eispickel (10) nach einem der vorhergehenden Ansprüche, **gekennzeichnet durch** ein Federmittel (60), welches zwischen Schaftabschnitt (12) und Handstütze (26) wirkend angeordnet ist.

9. Eispickel (10) nach einem der vorhergehenden Ansprüche, **dadurch gekennzeichnet, dass** ein oder das Federmittel (60) die Handstütze (26) in Richtung einer Annäherung des Vorsprungs (28) an die Spitze (16) des Eispickels (10) vorspannt.

10. Eispickel (10) nach Anspruch 8 oder Anspruch 9, **dadurch gekennzeichnet, dass** das Federmittel (60) ein an der Handstütze (26) angeordnetes Federelement (62, 62') und einen durch das Federelement (62; 62') zu dem Schaftabschnitt (12) hin vorgespannten Roll- oder Gleitabschnitt (66; 66') umfasst.

11. Eispickel (10) nach einem der vorhergehenden Ansprüche, **dadurch gekennzeichnet, dass** der Vorsprung (28) und die Haue (18) in einer Vorwärtsrichtung (V) des Eispickels (10) ausgerichtet sind.

12. Eispickel (10) nach einem der vorhergehenden Ansprüche, **dadurch gekennzeichnet, dass** der Kopfabschnitt (14) ferner einen Schaufelabschnitt (24) oder einen Hammerabschnitt aufweist, welcher sich in einer der Haue (18) entgegengesetzten Richtung (R) erstreckt.

## Claims

1. Ice axe (10), comprising a head portion (14) that has a pick (18), a tip (16), a shaft portion (12) that extends between the head portion (14) and the tip (16), and a hand rest (26) which is displaceable along the shaft portion (12) and can be fixed at different positions, the hand rest (26) having a projection (28) which protrudes from the shaft portion (12) in a radial direction, the hand rest (26) having a first blocking portion (50, 52), the first blocking portion (50, 52) coming into blocking engagement with a second blocking portion (40, 44) of the shaft portion (12) when a force is exerted on the projection (26) in the direction of the tip (16) of the ice pick, such that movement of the hand rest (26) in the direction of the tip (16) is blocked, the first blocking portion (50, 52) being released from the blocking engagement with the second blocking portion (40, 44) when a force is exerted on the projection (28) in the direction of the head portion (14) of the ice axe (10), such that movement of the hand rest (26) in the direction of the head portion (14) is permitted, and the hand rest (26) canting on the outer circumference (40, 44) of the shaft portion (12) when a force is exerted on the projection (28) in the direction of the tip (16) of the ice axe, such that movement along the shaft portion (12) is blocked, **characterised in that** the shaft portion (12) has a cylindrical outer circumference and **in that** the hand rest (26) has a through-opening (34) in which the shaft portion (12) is fittingly received, the through-opening (34) having a first contact portion (42) for contacting a surface portion (44) of the shaft portion (12) that faces the projection (28) and having a second contact portion (38) for contacting a surface portion (40) of the shaft portion (12) that faces away from the projection (28), the first contact portion (42) being offset, in relation to the second contact portion (38), towards the head portion (14) of the ice axe (10) in the axial direction (A) of the shaft portion (12) and the first and the second contact portion (42, 38) overlapping one another in the axial direction (A).

2. Ice axe (10) according to the preceding claim, **characterised in that** the hand rest (26) can tilt about a tilt axis (K) between a first position and a second position with respect to the shaft portion (12), the tilt axis (K) extending orthogonally to the shaft axis (A) and orthogonally to the radial direction in which the projection (28) projects from the shaft portion (12), displacement of the hand rest (26) along the shaft portion (12) towards the tip (16) being blocked when the hand rest (26) is set to the first position, and displacement of the hand rest (26) along the shaft portion (12) towards the tip (16) being permitted when the hand rest (26) is set to the second position.

3. Ice axe (10) according to claim 2, **characterised in that** the projection (28) approaches the head portion of the ice axe when the hand rest (26) moves from the first position into the second position.

4. Ice axe (10) according to either claim 2 or claim 3, **characterised in that** displacement of the hand rest (26) along the shaft portion (12) towards the head portion (14) is permitted when the hand rest (26) is set to the second position.

5. Ice axe (10) according to any of the preceding claims, **characterised in that** the blocking engagement between the first and the second blocking portion (50, 52, 44, 40) is a frictional engagement.

6. Ice axe (10) according to any of the preceding claims, **characterised in that** the blocking engagement between the first and the second blocking portion (70, 72) is an interlocking engagement.

7. Ice axe (10) according to any of the preceding claims, **characterised in that** one portion of the first blocking portion and the second blocking portion has at least one projection (70) and the other portion of the first blocking portion and the second blocking portion has at least one recess (72), the projection (70) being received in the recess (72) in the blocking engagement.

8. Ice axe (10) according to any of the preceding claims, **characterised by** a spring means (60) which is operatively arranged between the shaft portion (12) and the hand rest (26).

9. Ice axe (10) according to any of the preceding claims, **characterised in that** a or the spring means (60) pretensions the hand rest (26) in the direction in which the projection (28) approaches the tip (16) of the ice axe (10).

10. Ice axe (10) according to either claim 8 or claim 9, **characterised in that** the spring means (60) comprises a spring element (62, 62') that is arranged on the hand rest (26) and a rolling or sliding portion (66; 66') that is pretensioned by the spring element (62; 62') towards the shaft portion (12).

11. Ice axe (10) according to any of the preceding claims, **characterised in that** the projection (28) and the pick (18) are oriented in a forward direction (V) of the ice axe (10).

12. Ice axe (10) according to any of the preceding claims, **characterised in that** the head portion (14) further comprises a blade portion (24) or a hammer portion which extends in a direction (R) opposite to the pick (18).

## Revendications

1. Piolet (10), comprenant une partie de tête (14) avec une lame (18), une pointe (16), une partie de tige (12) s'étendant entre la partie de tête (14) et la pointe (16), et un repose-main (26) qui est déplaçable le long de la partie de tige (12) et peut être verrouillé dans différentes positions,
dans lequel le repose-main (26) comprend une saillie (28) faisant saillie radialement de la partie de tige (12),
le repose-main (26) comprenant une première partie de verrouillage (50, 52),
dans lequel la première partie de verrouillage (50, 52) lorsqu'une force est appliquée sur la saillie (26) en direction de la pointe (16) du piolet, entre en prise de blocage avec une deuxième partie de blocage (40, 44) de la partie de tige (12) de sorte que le mouvement du repose-main (26) en direction de la pointe (16) est bloqué,
dans lequel la première partie de blocage (50, 52) est libéré de l'engagement de blocage avec la deuxième partie de blocage (40, 44) lorsqu'une force est exercée sur la saillie (28) en direction de la partie de tête (14) du piolet (10), de sorte que le mouvement du repose-main (26) en direction de la partie de tête (14) est autorisé, et
dans lequel le repose-main (26), lorsqu'une force est exercée sur la saillie (28) en direction de la pointe (16) du piolet, bascule au niveau de la circonférence extérieure (40, 44) de la partie de tige (12) de sorte qu'un mouvement le long de la partie de tige (12) est bloqué,
**caractérisé en ce que** la partie de tige (12) a une circonférence extérieure cylindrique et **en ce que** le repose-main (26) a une ouverture traversante (34) dans laquelle la partie de tige (12) est reçue de manière adaptée, dans lequel l'ouverture traversante (34) comporte une première partie de butée (42) pour la mise en butée contre une partie de surface (44) de la partie de tige (12) faisant face à la saillie (28) et une deuxième partie de butée (38) pour la mise en butée contre une partie de surface (40) de la partie de tige (12) faisant face à l'opposé de la saillie (28), dans lequel la première partie de butée (42) est décalée par rapport à la deuxième partie de butée (38) dans la direction axiale (A) de la partie de tige (12) vers la partie de tête (14) du piolet (10) et dans lequel les première et deuxième parties de butée (42, 38) se chevauchent dans la direction axiale (A).

2. Piolet (10) selon l'une des revendications précédentes,
**caractérisé en ce que** le repose-main (26) est inclinable par rapport à la partie de tige (12) autour d'un axe d'inclinaison (K) entre une première position et une seconde position,
dans lequel l'axe d'inclinaison (K) est orthogonal à l'axe de tige (A) et orthogonal à la direction radiale dans laquelle la saillie (28) fait saillie de la partie de tige (12), dans lequel un déplacement du repose-main (26) le long de la partie de la tige (12) vers la pointe (16) est bloqué lorsque le repose-main (26) est placé dans la première position, et
dans lequel un déplacement du repose-main (26) le long de la partie de la tige (12) vers la pointe (16) est autorisé lorsque le repose-main (26) est placé dans la deuxième position.

3. Piolet (10) selon la revendication 2, **caractérisé en ce que** la saillie (28) s'approche de la partie de tête du piolet lorsque le repose-main (26) est déplacé de la première position à la deuxième position.

4. Piolet (10) selon la revendication 2 ou la revendication 3,
**caractérisé en ce qu'**un déplacement du repose-main (26) le long de la partie de tige (12) vers la partie de tête (14) est autorisé lorsque le repose-main (26) est placé dans la deuxième position.

5. Piolet (10) selon l'une des revendications précédentes,
**caractérisé en ce que** l'engagement de verrouillage entre la première et la deuxième partie de verrouillage (50, 52, 44, 40) est un engagement par friction.

6. Piolet (10) selon l'une des revendications précédentes, **caractérisé en ce que** l'engagement de blocage entre la première et la deuxième partie de blocage (70, 72) est un engagement positif.

7. Piolet (10) selon l'une des revendications précédentes,
**caractérisé en ce que** l'une parmi la première et la deuxième partie de blocage présente au moins une saillie (70) et l'autre de la première et la deuxième partie de blocage présente au moins un évidement (72), dans lequel dans l'engagement de blocage la saillie (70) est reçue dans l'évidement (72).

8. Piolet (10) selon l'une des revendications précédentes,
**caractérisé par** un moyen de ressort (60) disposé de manière opérationnelle entre la partie de manche (12) et le repose-main (26).

9. Piolet (10) selon l'une des revendications précédentes,
**caractérisé en ce qu'**un moyen de ressort ou le moyen de ressort (60) précontraint le repose-main (26) dans la direction d'une approche de la saillie (28) vers la pointe (16) du piolet (10).

10. Piolet (10) selon la revendication 8 ou la revendication 9,
**caractérisé en ce que** le moyen de ressort (60) comprend un élément de ressort (62, 62') disposé sur le repose-main (26) et une section de roulement ou de glissement (66 ; 66') précontrainte vers la section de tige (12) par l'élément de ressort (62 ; 62').

11. Piolet (10) selon l'une des revendications précédentes,
**caractérisé en ce que** la saillie (28) et la lame (18) sont alignées dans une direction avant (V) du piolet (10).

12. Piolet (10) selon l'une des revendications précédentes,
**caractérisé en ce que** la partie de tête (14) comprend en outre une partie de pelle (24) ou une partie de marteau s'étendant dans une direction (R) opposée à la lame (18).
